# EUROPÄISCHE PATENTSCHRIFT

(11) **EP 2 917 681 B1**
(45) Veröffentlichungstag und Bekanntmachung des Hinweises auf die Patenterteilung: **28.08.2019**
(21) Anmeldenummer: 13817850.4
(22) Anmeldetag: 06.11.2013
(51) Int. Cl.: F41H 13/00, G01S 17/66, G01S 7/481

(54) **MODULARE LASERBESTRAHLUNGSEINHEIT**
MODULAR LASER IRRADIATION UNIT
UNITÉ MODULAIRE D'IRRADIATION PAR LASER

(30) Priorität: 09.11.2012 DE 102012022039
(43) Veröffentlichungstag der Anmeldung: 16.09.2015
(73) Patentinhaber: MBDA Deutschland GmbH, 86529 Schrobenhausen (DE)
(72) Erfinder: PROTZ, Rudolf, D-85635 Höhenkirchen-Siegertsbrunn (DE)
(74) Vertreter: Isarpatent
(86) Internationale Anmeldenummer: PCT/DE2013/000650
(87) Internationale Veröffentlichungsnummer: WO 2014/071906

(56) Entgegenhaltungen:
- US-A1- 2010 282 942
- US-B1- 6 343 766
- US-B1- 6 407 535

## Beschreibung

### GEBIET DER ERFINDUNG

Die Erfindung betrifft eine Laserbestrahlungseinheit sowie ein Verfahren zum Bestrahlen eines Zielobjekts mit Laserstrahlung.

### HINTERGRUND DER ERFINDUNG

Hochleistungslaser werden sowohl im militärischen Bereich als auch im zivilen Bereich zum Bearbeiten von Zielobjekten eingesetzt. Beispielsweise kann mit einem Hochleistungsinfrarotlaser ein entferntes Zielobjekt, wie etwa Munition oder ein gegnerisches Ziel, bestrahlt werden, um das Zielobjekt zu beschädigen oder zu zerstören.

Eine entsprechende Laserbestrahlungseinheit muss in der Regel dazu das Zielobjekt erfassen, den Hochleistungsinfrarotlaserstrahl erzeugen und auf das Zielobjekt ausrichten.

US 6,343,766 B1 beschreibt eine Zielverfolgungseinrichtung für eine Laserwaffe. Die Laserwaffe erzeugt einen ersten Strahl, der ein Ziel erfasst, um einen Punkt darauf abzubilden. In einer ersten Ausführungsform beleuchtet ein Zielbeleuchter das Ziel mit einem zweiten Strahl der Strahlung. Ein Optiksystem empfängt und bildet den ersten und zweiten Träger der Strahlung getrennt voneinander ab. In einer zweiten Ausführungsform ist ein Sperrfilter anstelle eines Beleuchtungslasers ausgeführt, um nur Strahlung mit der Zielwellenlänge passieren zu lassen, wodurch sichergestellt wird, dass die ersten und zweiten Strahlungsbündel gesondert abgebildet werden.

US 2010/282942 A1 beschreibt ein Strahllenksubsystem und ein Verfahren zur Verwendung in einem Waffensystem. Das Strahllenksystem umfasst eine Quelle elektromagnetischer Strahlung zur Erzeugung eines hochenergetischen Lasers (HEL). Die elektromagnetische Strahlung ist auf einen Sekundärspiegel gerichtet, der die elektromagnetische Strahlung auf einen Primärspiegel für die Ausgabe des HEL Strahl reflektiert. Der Sekundärspiegel ist im Allgemeinen gebogen und erweitert die von der Quelle vor dem Ausgeben des HEL Strahl von dem Hauptspiegel empfangenen elektromagnetischen Strahlung. Das Subsystem umfasst ferner ein Spurverfolgungs-Teleskop, das mit dem Gehäuse gekoppelt ist. Das Spurverfolgungs-Teleskop weist einen Spurdetektor auf, welcher konfiguriert ist, elektromagnetische Strahlung zu empfangen, welche von der HEL und von einem Beleuchter ausgesendet und von einem Flugziel reflektiert wurde.

In der Druckschrift US 6 407 535 B1 ist eine Laserbestrahlungseinheit zum Bestrahlen eines Zielobjekts mit Hochleistungslaserstrahlung offenbart, wobei die Laserbestrahlungseinheit mehrere starr miteinander verbundene Laserstrahlmodule umfasst, die dazu ausgeführt sind, Laserstrahlung abzugeben, sowie eine Richteinheit zum Ausrichten der Laserstrahlmodule auf das Zielobjekt.

### ZUSAMMENFASSUNG DER ERFINDUNG

Es ist Aufgabe der Erfindung, eine einfach zu wartende und einfach zu bedienenden Laserbestrahlungseinheit bereitzustellen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft eine Laserbestrahlungseinheit zum Bestrahlen eines Zielobjekts mit Hochleistungslaserstrahlung. Die Laserbestrahlungseinheit bzw. das Laserbestrahlungsgerät kann beispielsweise an ein Fahrzeug oder Flugzeug montiert sein.

Gemäß einer Ausführungsform der Erfindung umfasst die Laserbestrahlungseinheit mehrere starr miteinander verbundene Laserstrahlmodule, die dazu ausgeführt sind, Laserstrahlung abzugeben; und eine Richteinheit, zum Ausrichten der Laserstrahlmodule auf das Zielobjekt; wobei jedes der Laserstrahlmodule eine Optik umfasst, die dazu ausgeführt ist, Laserstrahlung auf einen Zielpunkt des Zielobjekts auszurichten und/oder zu fokussieren.

Beispielsweise können die Laserstrahlmodule jeweils ein gleichartig aufgebautes (etwa rohrförmiges) Gehäuse aufweisen. Die Gehäuse können mittels eines gemeinsamen Rahmens miteinander verbunden sein. Dieser Rahmen kann auch weitere Module, wie etwa ein Kameramodul und/oder ein Beleuchtungsmodul, aufnehmen. Die Module können mit dem gemeinsamen Rahmen gemeinsam auf ein Ziel (grob) ausgerichtet werden.

Die Laserbestrahlungseinheit kann mehrere, möglichst gleichartige aufgebaute Module aufweisen, die eine punktgenaue Materialbearbeitung mit einer hohen Strahlleistung im Bereich von einigen zehn bis hundert Kilowatt auf große Entfernungen im km-Bereich ermöglichen.

Einsatzmöglichkeiten der Laserbestrahlungseinheit sind beispielsweise beim Abbau von Kernkraftwerken oder der Beseitigung von Munition. Ebenfalls ist ein militärischer Einsatz möglich.

Durch die Modularisierung der Laserbestrahlungseinheit mittels einer Mehrzahl von Modulen ist eine einfache Anpassung an die jeweiligen Anforderungen möglich. Die jeweils erforderliche Laserleistung lässt sich zum Beispiel einfach durch die Anzahl der Laserstrahlmodule anpassen.

Dabei umfasst die Optik aller Laserstrahlmodule einen Detektor zum Erfassen von eingehender Strahlung. Die Laserbestrahlungseinheit ist nämlich dahingehend modularisiert, dass jedes einzelne Laserstrahlmodul einen Detektor umfasst, der dazu ausgeführt ist, eingehende Strahlung (beispielsweise von einem Zielpunkt des Zielobjekts) zu erfassen, die dazu verwendet wird, die Optik derart einzustellen, dass sie auf einen Zielpunkt eingestellt, d.h. ausgerichtet und/oder fokussiert ist.

Gemäß einer Ausführungsform der Erfindung weist die Optik eines Laserstrahlmoduls ein verstellbares Teleskop auf, das dazu ausgeführt ist, eine ausgehende Laserstrahlung auf den Zielpunkt zu fokussieren und eingehende Strahlung auf einen Detektor zu fokussieren.

Gemäß einer Ausführungsform der Erfindung weist die Optik eines Laserstrahlmoduls einen verstellbaren Umlenkspiegel auf, der dazu ausgeführt ist, ausgehende Laserstrahlung auf den Zielpunkt auszurichten und eingehende Strahlung auf einen Detektor auszurichten.

Es ist zu verstehen, dass ein Bestrahlungs- bzw. Bearbeitungslasermodul ausgehende Hochleistungs-Laserstrahlung auf das Zielobjekt strahlen kann und gleichzeitig eingehende Zielmarkierungslaserstrahlung erfassen kann. Analog kann ein Zielmarkierungslasermodul ausgehende Zielmarkierungslaserstrahlung auf das Zielobjekt strahlen und gleichzeitig eingehende Beleuchtungsstrahlung erfassen.

Der Umlenkspiegel kann mit einem Aktuator, beispielsweise einem Elektro- oder Piezomotor, in zwei Richtungen geschwenkt werden, um auf diese Weise Strahlung vom Zielpunkt (zum Einstellen der Optik) auf den Detektor zu richten und um Strahlung (zum Bestrahlen des Zielpunkts) auf den Zielpunkt auszurichten.

Gemäß einer Ausführungsform der Erfindung weist die Optik eines Laserstrahlmoduls einen halbdurchlässigen Spiegel auf, der ausgehende Laserstrahlung reflektiert und für eingehende Strahlung durchlässig ist. Auf diese Weise kann die Strahlung für den Detektor und die Strahlung, die das Laserstrahlmodul verlassen soll, voneinander getrennt werden. Beispielsweise reflektiert der halbdurchlässige Spiegel nur im Wellenlängenbereich der ausgehenden Strahlung, ist aber in anderen Wellenlängenbereichen durchlässig.

Gemäß einer Ausführungsform der Erfindung umfasst ein Laserstrahlmodul eine Steuerung, die dazu ausgeführt ist, einen Aktuator eines verstellbaren Umlenkspiegels und/oder einen Aktuator eines verstellbaren Teleskops anzusteuern. Jedes Laserstrahlmodul kann eine eigene Steuerung aufweisen, die beispielsweise in das Gehäuse des Laserstrahlmoduls verbaut ist, wodurch die Laserbestrahlungseinheit weiter modularisiert werden kann. Die Laserstrahlmodule können mit der Steuerung ihre Optik selbstständig einstellen.

Gemäß einer Ausführungsform der Erfindung umfasst die Laserbestrahlungseinheit weiter mehrere Laserquellen, die dazu ausgeführt sind, Laserstrahlung zu erzeugen und die jeweils mit einer optischen Faser mit einem Laserstrahlmodul verbunden sind. Die Richteinheit kann dazu ausgeführt sein, die Laserstrahlmodule unabhängig von den Laserquellen zu bewegen. Die Laserquellen können Faserlaser sein, die beispielsweise ein Infrarotlicht für die Bestrahlungslaserstrahlmodule und/oder ein Licht im sichtbaren Bereich für ein Zielmarkierungslaserstrahlmodul erzeugen können.

Gemäß einer Ausführungsform der Erfindung umfasst die Laserbestrahlungseinheit weiter mehrere erste (Hochleistungs-, Bestrahlungs- und/oder Bearbeitungs-) Laserstrahlmodule, die dazu ausgeführt sind, erste Laserstrahlung einer ersten Wellenlänge abzugeben, und ein zweites (Zielmarkierungs-) Laserstrahlmodul, das dazu ausgeführt ist, zweite Laserstrahlung einer zweiten Wellenlänge abzugeben und auf den Zielpunkt zu fokussieren.

Die ersten Laserstrahlmodule können dazu ausgeführt sein, die zweite Laserstrahlung mit einem Detektor zu detektieren und können eine verstellbare Optik aufweisen, die die eingehende zweite Laserstrahlung auf den Detektor ausrichtet und gleichzeitig die ausgehende erste Laserstrahlung auf den Zielpunkt ausrichtet. Mit anderen Worten kann eine auf den Zielpunkt gerichtete zweite Laserstrahlung aus einem zweiten Lasermodul dazu verwendet werden, die ersten Laserstrahlmodule auf den Zielpunkt auszurichten und/oder zu fokussieren.

Gemäß einer Ausführungsform der Erfindung ist die erste Laserstrahlung dazu geeignet, das Zielobjekt zu bearbeiten. Beispielsweise kann die erste Laserstrahlung von einem ersten Laserstrahlmodul zwischen 1 Kilowatt und 10 Kilowatt Leistung aufweisen.

Gemäß einer Ausführungsform der Erfindung ist das zweite Laserstrahlmodul dazu ausgeführt, eine Beleuchtungsstrahlung mit einem Detektor zu detektieren. Mit anderen Worten kann eine auf den Zielpunkt gerichtete Beleuchtungsstrahlung aus einem Beleuchtungsmodul dazu verwendet werden, das zweite Laserstrahlmodul auf den Zielpunkt auszurichten.

Das zweite Laserstrahlmodul kann eine verstellbare Optik aufweisen, die die eingehende Beleuchtungsstrahlung auf den Detektor ausrichtet und gleichzeitig die ausgehende zweite Laserstrahlung auf den Zielpunkt ausrichtet und/oder fokussiert.

Gemäß einer Ausführungsform der Erfindung ist die Optik der Laserstrahlmodule gleich aufgebaut. Sowohl die Bearbeitungslaserstrahlmodule als auch die Zielmarkierungslaserstrahlmodule können eine Optik mit einem verstellbaren Teleskop, einem verstellbaren Umlenkspiegel und/oder einem halbdurchlässigen Spiegel aufweisen, die ähnliche oder baugleiche Komponenten umfassen.

Gemäß einer Ausführungsform der Erfindung umfasst die Laserbestrahlungseinheit weiter ein mit den Laserstrahlmodulen starr verbundenes Zielbeleuchtungs-Strahlmodul, das eine Beleuchtungsquelle zum Erzeugen einer Beleuchtungsstrahlung und ein Teleskop zum Fokussieren der Beleuchtungsstrahlung umfasst. Wenn das Umgebungslicht nicht ausreicht, kann das Zielbeleuchtungsstrahlmodul, das beispielsweise eine Strahlung im sichtbaren Bereich erzeugt, dazu verwendet werden, das Zielobjekt auszuleuchten.

Gemäß einer Ausführungsform der Erfindung umfasst die Laserbestrahlungseinheit weiter ein mit den Laserstrahlmodulen starr verbundenes Kameramodul, das eine Kamera und ein Teleskop umfasst. Mit dem Kameramodul kann ein Bild von dem Bereich erfasst werden, auf den die Laserstrahlmodule gerade gerichtet sind. Das Bild kann auf einem Bildschirm angezeigt werden, so dass eine Person das Kameramodul zusammen mit den anderen Modulen auf das Zielobjekt ausrichten kann.

Gemäß einer Ausführungsform der Erfindung weisen die Laserstrahlmodule (und/oder das Zielbeleuchtungsmodul und/oder das Kameramodul) jeweils ein rohrförmiges Gehäuse auf. Die rohrförmigen Gehäuse können (beispielsweise mit einem gemeinsamen Rahmen) zu einem Bündel zusammengefasst sein, das von der Richteinheit bewegbar ist. Dazu kann die Richteinheit einen oder mehrere Aktuatoren aufweisen, die das Bündel bewegen können.

Ein erster Aspekt der Erfindung betrifft ein Verfahren zum Bestrahlen eines Zielobjekts mit Hochleistungslaserstrahlung. Es ist zu verstehen, dass Merkmale des Verfahrens Merkmale der Laserbestrahlungseinheit sein können und umgekehrt.

Gemäß einer Ausführungsform der Erfindung umfasst das Verfahren die Schritte von: Erfassen eines Zielpunkts eines Zielobjekts mit einem Detektor eines Zielmarkierungslaserstrahlmoduls, wobei der Detektor dazu ausgeführt ist, eine Wellenlänge zu erfassen, die sich von einer Wellenlänge einer Zielerfassungslaserstrahlung unterscheidet; Ausrichten eines Zielmarkierungslaserstrahls auf den Zielpunkt mit dem Zielmarkierungslaserstrahlmodul; Verstellen einer Optik eines Bearbeitungslaserstrahlmoduls, so dass Zielmarkierungslaserstrahlung auf einen Detektor des Bearbeitungslaserstrahlmoduls gerichtet wird, wobei der Detektor dazu ausgeführt ist, eine Wellenlänge der Zielerfassungslaserstrahlung zu erfassen; und Bestrahlen des Zielpunkts mit einem Bearbeitungslaserstrahl, wobei der Bearbeitungslaserstrahl von der Optik des Bearbeitungslaserstrahlmoduls ausgerichtet (und fokussiert) wird, die auch die Zielmarkierungslaserstrahlung auf den Detektor des Bearbeitungslaserstrahlmoduls ausrichtet (und fokussiert).

Beispielsweise kann Beleuchtungslicht oder Beleuchtungslaserstrahlung, das oder die beispielsweise von einem Beleuchtungsmodul stammen kann, mit dem Zielmarkierungslasermodul erfasst werden. Dies kann dadurch geschehen, dass eine Optik des Zielmarkierungslasermoduls derart eingestellt bzw. verstellt wird, dass die Beleuchtungslaserstrahlung auf einen Detektor (beispielsweise eine Kamera) gerichtet wird, so dass der Zielpunkt auf das Zentrum der Kamera abgebildet wird. Die gleiche Optik (die beispielsweise einen verstellbaren Umlenkspiegel zum Ausrichten der Beleuchtungslaserstrahlung und/oder ein verstellbares Teleskop zum Fokussieren des Zielpunkts auf den Detektor umfassen kann) kann dann dazu verwendet werden, einen Zielmarkierungslaserstrahl auf den Zielpunkt auszurichten und zu fokussieren.

Das Bestrahlungslasermodul erfasst mit einer Optik, die eine identische oder baugleiche Optik wie die des Zielmarkierungslaserstrahlmoduls sein kann, die Zielmarkierungslaserstrahlung von dem Zielpunkt. Analog wie das Zielmarkierungslaserstrahlmodul stellt das Bestrahlungslasermodul seine Optik so ein, dass der Zielpunkt auf einen Detektor (beispielsweise einen Vierquadrantendetektor) ausgerichtet und fokussiert ist. Mit der gleichen Optik wird dann der Bestrahlungslaser auf den Zielpunkt gerichtet und fokussiert und mit Bestrahlungslaserstrahlung bearbeitet.

Die eben genannten Verfahrensschritte können zum Feineinstellen der Laserstrahlen auf einen Zielpunkt des Zielobjekts verwendet werden.

Zum Grobeinstellen bzw. Grobausrichten der Laserbestrahlungseinheit können die Lasermodule gemeinsam auf das Zielobjekt ausgerichtet werden, indem sie beispielweise mit einer Richteinheit, die um zwei Achsen schwenkbar ist, gemeinsam bewegt werden.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt schematisch eine Frontansicht einer Laserbestrahlungseinheit gemäß einer Ausführungsform der Erfindung.
Fig. 2 zeigt schematisch eine Seitenansicht der Laserbestrahlungseinheit aus der Fig. 1.
Fig. 3 zeigt ein Flussdiagramm für ein Verfahren zum Bestrahlen eines Zielobjekts mit Hochleistungslaserlicht gemäß einer Ausführungsform der Erfindung.
Fig. 4 zeigt eine schematische Querschnittsansicht eines Hochleistungslaser-Strahlmoduls für eine Laserbestrahlungseinheit gemäß einer Ausführungsform der Erfindung.
Fig. 5 zeigt eine schematische Querschnittsansicht eines Hochleistungslaser-Strahlmoduls für eine Laserbestrahlungseinheit gemäß einer Ausführungsform der Erfindung.
Fig. 6 zeigt eine schematische Querschnittsansicht eines Zielmarkierungslaser-Strahlmoduls für eine Laserbestrahlungseinheit gemäß einer Ausführungsform der Erfindung.
Fig. 7 zeigt eine schematische Querschnittsansicht eines Kameramoduls für eine Laserbestrahlungseinheit gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

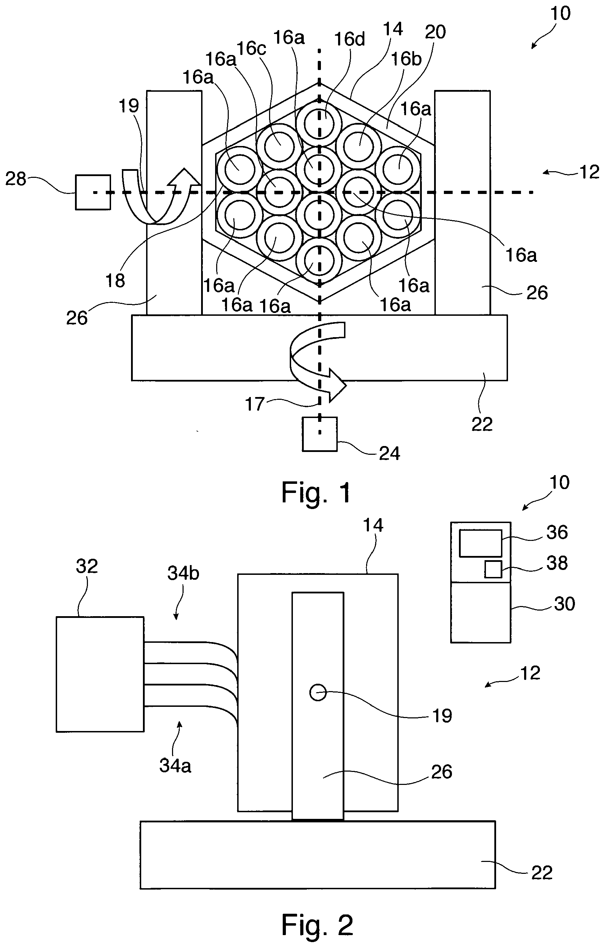

Fig. 1 und Fig. 2 zeigen eine Laserbestrahlungseinheit 10, die eine Richteinheit 12 umfasst, die dazu ausgeführt ist, eine Bündelungseinheit 14 mit Modulen 16a,16b, 16c, 16d auszurichten. Die Module 16a, 16b, 16c, 16d umfassen eine Mehrzahl von Hochleistungslaser-Strahlmodulen 16a, ein Zielmarkierungslaser- Strahlmodul 16b, ein Zielbeleuchtungs-Strahlmodul 16c und ein Kameramodul 16d.

Die Module 16a, 16b, 16c, 16d umfassen gleichartig bzw. identisch aufgebaute zylinderförmige Gehäuse 18, die einen kreisförmigen Querschnitt aufweisen können. Die Bündelungseinheit 14 bündelt die Module 16a, 16b, 16c, 16d mittels eines starren Rahmens 20 zu einem parallelen Bündel, bei dem die Module 16a, 16b, 16c, 16d bzw. die Gehäuse 18 parallel zueinander in einem wabenartigen Muster angeordnet sind.

Die Module 16b, 16c, 16d sind dabei am oberen Rand des Bündels angeordnet, wobei sich das Kameramodul 16d in der Mitte befindet.

Die Achsparallelität der Module 16a, 16b, 16c, 16d bzw. der Gehäuse 18 kann wenige hundert mrad betragen. Die Größe der Bündelungseinheit 14 kann nach Anzahl der benötigten Module 16a, 16b, 16c, 16d individuell bemessen werden.

Die Bündelungseinheit 14 ist zum Grobausrichten der Laserstrahlung aus den Modulen 16a, 16b, 16c auf ein Ziel bzw. Zielobjekt beweglich auf der Richteinheit 12 befestigt. Die Bündelungseinheit 14 kann mittels der Richteinheit 12 bezüglich zwei Achsen 17,19 ausgerichtet werden.

Die Richteinheit 12 umfasst eine Azimut-Rotationseinheit 22, die beispielsweise mit einem Aktuator 24 um die Achse 17 rotiert werden kann. Weiter umfasst die Richteinheit 14 eine Elevations-Rotationseinheit 26, mit der die Bündelungseinheit 14, beispielsweise mit einem Aktuator 28, um die Achse 19 rotiert werden kann.

Die beiden Aktuatoren 24, 28 können beispielsweise Elektromotoren umfassen, die von einer Steuerung 30 (siehe Fig. 2) angesteuert werden können.

Das Laserlicht für die Höchstleistungslaser-Strahlmodule 16a und das Zielmarkierungslaser-Strahlmodul 16b wird in einem Lasermodul 32 erzeugt, das eine Mehrzahl von Faserlasern 34a, 34b aufnimmt, die mit den Strahlmodulen 16a, 16b verbunden sind. Das Einkoppeln der Faserlaser 34a, 34b in die einzelnen Module 16a, 16b erfolgt über die Fasern 34a, 34b, die beispielsweise mit einem Stecker des jeweiligen Moduls 16a, 16b verbunden sind.

Das Lasermodul 32 kann von der Richteinheit 12 mechanisch entkoppelt sein, so dass es nicht mit der Richteinheit 12 bewegt wird, wenn diese auf das Zielobjekt ausgerichtet wird.

Weiter kann die Laserbestrahlungseinheit 10 einen Bildschirm 36 umfassen, auf dem ein von dem Kameramodul 16d erzeugtes Bild angezeigt werden kann, und eine Bedieneinheit 38, mit der eine Person Laserbestrahlungseinheit 10 grob ausrichten und ein Zielobjekt auf dem Bildschirm 36 markieren kann.

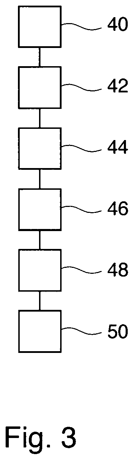

Fig. 3 zeigt ein Flussdiagramm für ein Verfahren zum Bestrahlen eines Zielobjekts mit Hochleistungslaserlicht, das mit der Laserbestrahlungseinheit 10 durchgeführt werden kann.

Im Schritt 40 wird die Richteinheit 12 mittels des Kameramoduls 16d auf das zu bestrahlende Zielobjekt ausgerichtet. Dazu kann beispielsweise das aktuelle Bild des Kameramoduls 16d auf dem Bildschirm 36 angezeigt werden und eine Person kann mit der Bedieneinheit 38 (zum Beispiel mit einem Joystick) die Richteinheit 12 bewegen. Die Steuerung 30 erzeugt dazu entsprechende Steuerbefehle, die an die Aktuatoren 24, 28 versendet werden.

Im Schritt 42 wird ein Zielpunkt gewählt. Dies kann beispielsweise auch von einer Person durchgeführt werden, die mittels der Bedieneinheit 38 und dem Bildschirm 36 den Zielpunkt auf dem Zielobjekt markiert. Auch ist möglich, dass der Zielpunkt durch Mustererkennung durch die Steuerung 30 ermittelt wird.

Im Schritt 44 wird das Zielobjekt mittels des Zielbeleuchtungs-Strahlmoduls 16c flächig beleuchtet. Das Zielbeleuchtungs-Strahlmodul 16c kann beispielsweise einen aufgewerteten Laserstrahl erzeugen, der ein Zielobjekt flächig beleuchten kann.

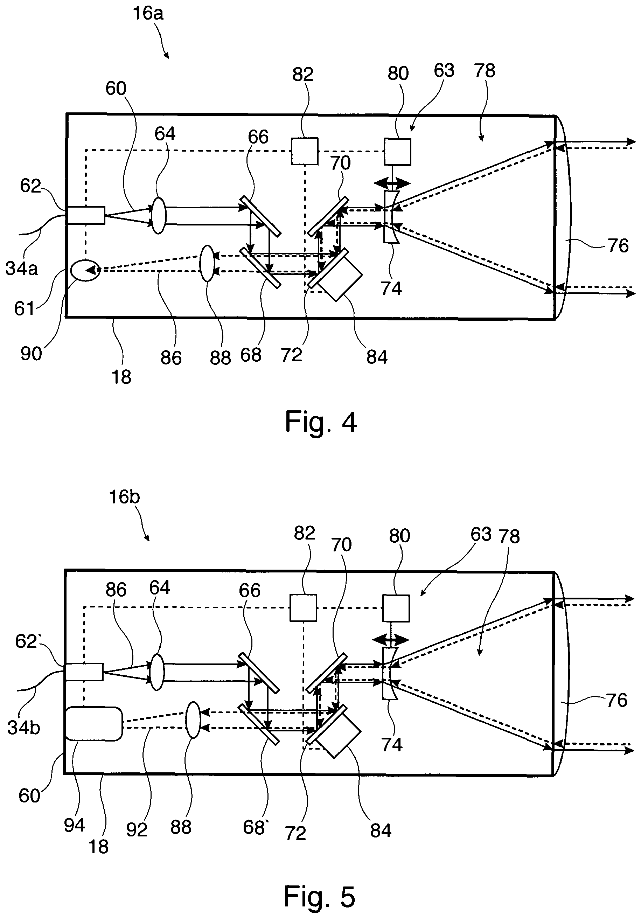

Im Schritt 46 wird ein Strahl eines Zielmarkierungslasers aus dem Strahlmodul 16b für Zielmarkierungslaserstrahlung auf den ausgewählten Zielpunkt ausgerichtet und fokussiert. Dies wird in Bezug auf die Fig. 5 noch ausführlicher beschrieben.

Im Schritt 48 werden die Strahlachsen der Strahlmodule 16a für Hochleistungslaserstrahlung mittels der empfangenen Strahlung des Zielmarkierungslasers auf den ausgewählten Zielpunkt ausgerichtet und fokussiert. Dies wird in Bezug auf die Fig. 4 noch ausführlicher beschrieben.

Im Schritt 50 wird die Bestrahlung des Zielobjekts mittels Hochleistungslaserstrahlung aus den Hochleistungslaser-Strahlmodulen 16a durchgeführt.

Die Schritte 40 bis 50 zeigen einen zeitlichen Ablauf, mit dem beispielsweise eine Materialbearbeitung des Zielobjekts auf große Entfernung durchgeführt werden kann.

Die Fig. 4 zeigt schematisch ein Strahlmodul 16a für Hochleistungslaserstrahlung 60.

Das Strahlmodul 16a ermöglicht die Feinausrichtung und Fokussierung der Strahlung 60 eines Hochleistungsfaserlasers 34a. Solche Faserlaser sind als Single-Mode-Laser bis zu einer Leistung von 10 kW kommerziell erhältlich. Die Wellenlänge der Strahlung 60 ist typischerweise 1,07 µm (Infrarot).

Das Strahlmodul 16a umfasst ein starres röhrenförmiges Gehäuse 18, das beispielsweise einen Durchmesser von 20 cm aufweisen kann. Die Länge des Gehäuses 18 beträgt beispielsweise ca. 1 m.

Das eine Ende des Gehäuses umfasst einen Deckel 61, der das Gehäuse zu diesem Ende hin abschließt. Der Deckel 61 enthält mittig einen Faserstecker 62, in den die Ausgangsfaser 34a eines Hochleistungslasers 32 eingekoppelt werden kann.

Im Inneren des Gehäuses 18 befindet sich eine Optik 63, die mehrere Linsen, Umlenkspiegel, Aktuatoren und einen Detektor umfassen kann.

Der divergente Strahl aus der Ausgangsfaser 34a wird über eine Linse 64 parallel kollimiert, über die Umlenkspiegel 66, 68, 70, 72 um jeweils 90° umgelenkt und über das aus der plankonkaven Linse 74 und der plankonvexen Linse 76 gebildete Aufweitteleskop 78 nach außen hin abgestrahlt. Die Linse 76 deckt dabei das andere Ende des Gehäuses 18 ab.

Mit dem aus den Linsen 74, 76 gebildeten Teleskop 78 kann die Hochleistungslaserstrahlung 60 aus der Faser 34a auf den Zielpunkt am Zielobjekt fokussiert werden.

Der Durchmesser der Linse 76 beträgt beispielsweise 20 cm, ihre Brennweite beispielsweise 50 cm. Der Durchmesser der Linse 74 beträgt beispielsweise 4 cm, ihre Brennweite beispielsweise -10 cm. Durch Variation des typischen Abstandes der beiden Linsen 74, 76 von beispielsweise ca. 40 cm mittels Verschiebung der Linse 74 in Längsrichtung des Strahlmoduls 16a um wenige Zentimeter kann der Laserstrahl aus der Faser 34a auf den Zielpunkt fokussiert werden. Das Strahlmodul 16a kann dazu einen Aktuator 80 aufweisen, der von einer Steuerung 82 angesteuert werden kann. Die Steuerung kann sich im Gehäuse 18 des Strahlmoduls 16a befinden.

Mit dem Umlenkspiegel 72 kann die Hochleistungslaserstrahlung 60 aus der Faser 34a auf den Zielpunkt am Zielobjekt ausgerichtet werden. Der Umlenkspiegel 72 ist in zwei senkrechten Achsen bewegbar. Das Strahlmodul 16a kann dazu einen weiteren Aktuator 84 aufweisen, der auch von einer Steuerung 82 angesteuert werden kann. Beispielsweise kann der Aktuator 84 eine Trägerplatte des Umlenkspiegels 72 im Kleinwinkelbereich von wenigen mrad mit hoher Genauigkeit verstellen.

Um die Stellung des Umlenkspiegels 72 und des Teleskops 78 zu finden, bei der 25 die Hochleistungslaserstrahlung auf den Zielpunkt ausgerichtet und fokussiert ist, wird Laserstrahlung 86 aus einem Zielmarkierungslaser-Strahlmodul 16b verwendet.

Die Laserstrahlung 86 ist das vom Zielpunkt zurückgestrahlte Licht eines im Strahlmodul 16b enthaltenen Zielmarkierungslasers. Die Laserstrahlung 86 weist eine andere Wellenlänge als die Strahlung 60 auf.

Die Laserstrahlung 86 wird über die Linse 76 empfangen und über die Linse 74, den Umlenkspiegel 70 und den Umlenkspiegel 72 gelenkt. Der Umlenkspiegel 68 weist eine Beschichtung auf, welche für die Wellenlänge der Zielmarkierungslaserstrahlung 86 transparent ist (aber die Strahlung 60 reflektiert) und wird deshalb von dieser durchstrahlt. Die Strahlung 86 wird anschließend mittels der Linse 88 auf einen positionsempfindlichen Detektor 90 fokussiert. Der Detektor 90 kann beispielsweise ein Quadrantendetektor sein.

Die Steuerung 82 empfängt die Detektorsignale des Detektors 90, wertet diese elektronisch aus und berechnet die Winkelablage (d.h. den Winkelfehler) der empfangenen Strahlung 86. Anschließend verstellt die Steuerung 82 den Umlenkspiegel 72 (durch Ansteuern des Aktuators 84) und/oder das Teleskop 78 (durch Ansteuern des Aktuators 80).

Aus der Laufzeit des Empfangssignals des Detektor 90 kann auch die Entfernung zum Zielpunkt bestimmt werden.

Die Fig. 5 zeigt den Aufbau des Strahlmoduls 16b für Zielmarkierungslaserstrahlung 86. Bis auf die folgenden Ausnahmen kann der Aufbau des Strahlmoduls 16b identisch mit dem Aufbau des Strahlmoduls 16a aus der Fig. 4 sein.

Der Faserstecker 62' ist für die Aufnahme eines Faserendes 34b eines Zielmarkierungslasers ausgeführt. Der Zielmarkierungslaser ist beispielsweise ein gepulster Laser mit der Wellenlänge 532 nm (beispielsweise sichtbares Licht).

Der Umlenkspiegel 68' reflektiert die Strahlung 68, ist aber für Strahlung 92 aus dem Zielbeleuchtungs-Strahlmodul 16c durchlässig. Beispielsweise kann der Umlenkspiegel 68' mit einer schmalbandigen, im Wellenlängenbereich der Zielmarkierungslaserstrahlung 86 hochreflektierenden Beschichtung versehen sein.

Weiter weist das Strahlmodul 16b anstatt dem positionsempfindlichen Detektor 90 eine bildgebende Kamera 94 auf. Mittels der Kamera 94 wird im Wellenlängenbereich außerhalb der Wellenlänge der Zielmarkierungslaserstrahlung 86 ein Bild vom Zielobjekt empfangen. Das Licht bzw. die Strahlung 92 kann beispielsweise aus dem Strahlmodul 16c stammen. Die optische Achse der Kamera 94 ist mit der optischen Achse der Zielmarkierungslaserstrahlung 86 harmonisiert.

Das von der Kamera 94 aufgenommene Bild kann von der Steuerung 82 empfangen werden, an die Steuerung 30 übertragen werden und/oder beispielsweise auf dem Bildschirm 36 angezeigt werden. Mit diesem Bild kann eine Person beispielsweise den Zielpunkt auf dem Zielobjekt wählen.

Durch das Auswählen des Zielpunkts wird der Umlenkspiegel 72 auf den Zielpunkt ausgerichtet und/oder das Teleskop 78 auf den Zielpunkt fokussiert. Damit wird die optische Achse des Strahlmoduls 16b auf den Zielpunkt gerichtet und die Strahlung 86 des Zielmarkierungslasers auf den Zielpunkt ausgerichtet und fokussiert.

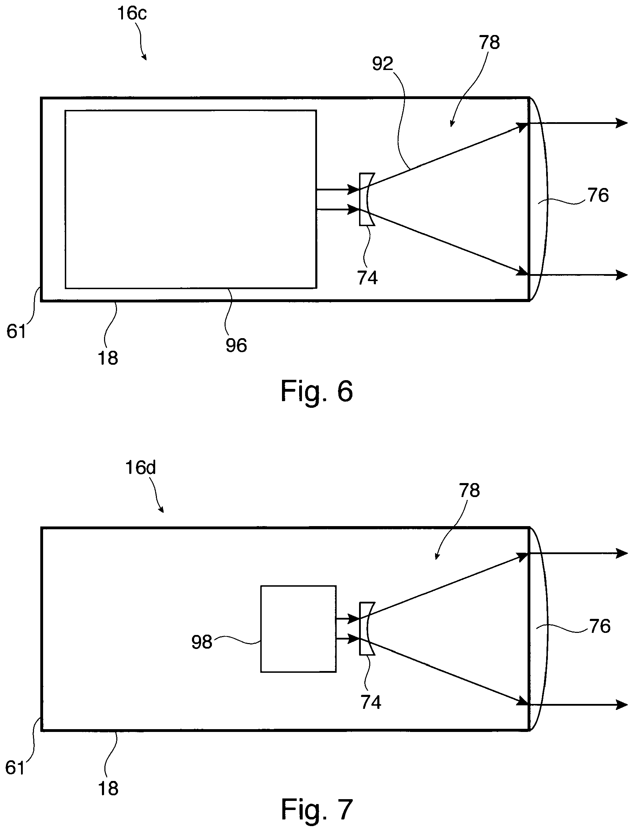

Die Fig. 6 zeigt ein Strahlmodul 16c zur Zielbeleuchtung. Zur flächigen Beleuchtung des Zielobjektes bei nicht hinreichend vorhandener äußerer Beleuchtung kann das Strahlmodul 16c zur Zielbeleuchtung verwendet werden.

Das Strahlmodul 16c umfasst genauso wie die Strahlmodule 16a, 16b ein röhrenförmiges Gehäuse 18 und ein Teleskop 78, das aus den Linsen 74 und 76 gebildet ist. Das Teleskop 78 strahlt das Licht eines Zielbeleuchtungslasers 96 mit einem Winkel von typischerweise einigen mrad auf das Zielobjekt ab. Der Zielbeleuchtungslaser 96, der die Strahlung 92 erzeugt, befindet sich im Gehäuse 18.

Die Wellenlänge der Strahlung 92 beträgt typischerweise ca. 900 nm (nahes Infrarot).

Die Fig. 7 zeigt ein Kameramodul 16d zum Grobrichten der Richteinheit 12.

Das Kameramodul 16d dient zum Ausrichten der gebündelten Module 16a, 16b, 16c, 16d auf das Zielobjekt. Dazu wird die zweiachsige Richteinheit 12 angesteuert.

Analog dem Strahlmodul 16c umfasst das Kameramodul 16d ein Teleskop 78 im Gehäuse 18. Weiter umfasst das Kameramodul 16d eine bildgebende Kamera 98.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Laserbestrahlungseinheit (10) zum Bestrahlen eines Zielobjekts mit Hochleistungslaserstrahlung (60), die Laserbestrahlungseinheit (10) umfassend:
mehrere starr miteinander verbundene Laserstrahlmodule (16a, 16b), die dazu ausgeführt sind, Laserstrahlung (60, 86) abzugeben;
eine Richteinheit (12), zum Ausrichten der Laserstrahlmodule (16a, 16b) auf das Zielobjekt,
**gekennzeichnet durch**
ein mit den Laserstrahlmodulen (16a, 16b) starr verbundenes Zielbeleuchtungsstrahlmodul (16c), das eine Beleuchtungsquelle (96) zum Erzeugen einer Beleuchtungsstrahlung (92) und ein Teleskop (78) zum Fokussieren der Beleuchtungsstrahlung umfasst;
wobei jedes der Laserstrahlmodule (16a, 16b) eine Optik (63) umfasst, die dazu ausgeführt ist, Laserstrahlung (60, 86) auf einen Zielpunkt des Zielobjekts auszurichten;
wobei die Laserstrahlmodule (16a, 16b) und das Zielbeleuchtungsstrahlmodul (16c) jeweils ein gleichartig aufgebautes zylinderförmiges Gehäuse aufweisen und achsparallel zueinander ausgerichtet sind;
wobei die Strahlmodule (16a, 16b, 16c) derart modularisiert sind, dass die Optik (63) jedes der Strahlmodule (16a, 16b, 16c) einen Detektor (90, 94) zum Erfassen von eingehender Strahlung (86, 88) umfasst.

2. Laserbestrahlungseinheit (10) nach Anspruch 1 oder 2,
wobei die Optik (63) eines Laserstrahlmoduls (16a, 16b) ein verstellbares Teleskop (78) aufweist, das dazu ausgeführt ist, eine ausgehende Laserstrahlung (60, 86) auf den Zielpunkt zu fokussieren und eingehende Strahlung (86, 92) auf einen Detektor (90, 94) zu fokussieren.

3. Laserbestrahlungseinheit (10) nach einem der vorhergehenden Ansprüche, wobei die Optik (63) eines Laserstrahlmoduls (16a, 16b) einen verstellbaren Umlenkspiegel (72, 72) aufweist, der dazu ausgeführt ist, ausgehende Laserstrahlung auf den Zielpunkt auszurichten und eingehende Strahlung auf einen Detektor (90, 94) auszurichten.

4. Laserbestrahlungseinheit (10) nach einem der vorhergehenden Ansprüche, wobei die Optik (63) eines Laserstrahlmoduls (16a, 16b) einen halbdurchlässigen Spiegel (68, 68') aufweist, der ausgehende Laserstrahlung reflektiert und für eingehende Strahlung durchlässig ist.

5. Laserbestrahlungseinheit (10) nach einem der vorhergehenden Ansprüche, wobei ein Laserstrahlmodul (16a, 16b) eine Steuerung (82) umfasst, die dazu ausgeführt ist, einen Aktuator (80) eines verstellbaren Teleskops (78) und/oder einen Aktuator (84) eines verstellbaren Umlenkspiegels (72) anzusteuern.

6. Laserbestrahlungseinheit (10) nach einem der vorhergehenden Ansprüche, weiter umfassend:
mehrere Laserquellen (32), die dazu ausgeführt sind, Laserstrahlung zu erzeugen und die jeweils mit einer optischen Faser (34a, 34b) mit einem Laserstrahlmodul (16a, 16b) verbunden sind,
wobei die Richteinheit (12) dazu ausgeführt ist, die Laserstrahlmodule (16a, 16b) unabhängig von den Laserquellen (32) zu bewegen.

7. Laserbestrahiungseinheit (10) nach einem der vorhergehenden Ansprüche, weiter umfassend:
mehrere erste Laserstrahlmodule (16a), die dazu ausgeführt sind, erste Laserstrahlung (60) einer ersten Wellenlänge abzugeben, ein zweites Laserstrahlmodul (16b), das dazu ausgeführt ist, zweite Laserstrahlung (86) einer zweiten Wellenlänge abzugeben und auf den Zielpunkt zu fokussieren,
wobei die ersten Laserstrahlmodule (16a) dazu ausgeführt sind, die zweite Laserstrahlung (86) mit einem Detektor (90) zu detektieren, wobei die ersten Laserstrahlmodule (16a) eine verstellbare Optik (63) aufweisen, die die eingehende zweite Laserstrahlung (86) auf den Detektor (90) ausrichtet und gleichzeitig die ausgehende erste Laserstrahlung (60) auf den Zielpunkt ausrichtet.

8. Laserbestrahlungseinheit (10) nach Anspruch 8,
wobei die erste Laserstrahlung (60) dazu geeignet ist, das Zielobjekt zu bearbeiten.

9. Laserbestrahlungseinheit (10) nach Anspruch 8 oder 9,
wobei das zweite Laserstrahlmodul (16b) dazu ausgeführt ist, eine Beleuchtungsstrahlung (92) mit einem Detektor (94) zu detektieren;
wobei das zweite Laserstrahlmodul (16b) eine verstellbare Optik (63) aufweist, die die eingehende Beleuchtungsstrahlung (92) auf den Detektor (94) ausrichtet und gleichzeitig die ausgehende zweite Laserstrahlung (86) auf den Zielpunkt ausrichtet.

10. Laserbestrahlungseinheit (10) nach einem der vorhergehenden Ansprüche, wobei die Optik (63) der Laserstrahlmodule (16a, 16b) gleich aufgebaut ist.

11. Laserbestrahlungseinheit (10) nach einem der vorhergehenden Ansprüche, weiter umfassend:
ein mit den Laserstrahlmodulen starr verbundenes Kameramodul (16d), das eine Kamera (98) und ein Teleskop (78) umfasst.

12. Laserbestrahlungseinheit (10) nach einem der vorhergehenden Ansprüche,
wobei die Laserstrahlmodule (16a, 16b) jeweils ein rohrförmiges Gehäuse (18) aufweisen,
wobei die rohrförmigen Gehäuse (18) zu einem Bündel zusammengefasst sind, das von der Richteinheit (12) bewegbar ist.

## Claims

1. Laser irradiation unit (10) for irradiating a target object with high-power laser radiation (60), the laser irradiation unit (10) comprising:
a plurality of rigidly interconnected laser radiation modules (16a, 16b) configured to emit laser radiation (60, 86) ;
a directing unit (12) for orientating the laser radiation modules (16a, 16b) onto the target object,
**characterised by**
a target illumination radiation module (16c) which is rigidly connected to the laser radiation modules (16a, 16b) and which comprises an illumination source (96) for generating an illumination radiation (92) and a telescope (78) for focussing the illumination radiation;
each of the laser radiation modules (16a, 16b) comprising an optical system (63) configured to orientate laser radiation (60, 86) onto a target point of the target object;
the laser radiation modules (16a, 16b) and the target illumination radiation module (16c) each having a similarly constructed cylindrical housing and being orientated with mutually parallel axes;
the radiation modules (16a, 16b, 16c) being modularised in such a way that the optical system (63) of each of the radiation modules (16a, 16b, 16c) comprises a detector (90, 94) for capturing incoming radiation (86, 88).

2. Laser irradiation unit (10) according to either claim 1 or claim 2,
wherein the optical system (63) of a laser radiation module (16a, 16b) has an adjustable telescope (78) configured to focus an outgoing laser radiation (60, 86) onto the target point and incoming radiation (86, 92) onto a detector (90, 94) .

3. Laser irradiation unit (10) according to any of the preceding claims,
wherein the optical system (63) of a laser radiation module (16a, 16b) has an adjustable deflecting mirror (72, 72) configured to orientate outgoing laser radiation onto the target point and incoming radiation onto a detector (90, 94) .

4. Laser irradiation unit (10) according to any of the preceding claims,
wherein the optical system (63) of a laser radiation module (16a, 16b) has a semi-transparent mirror (68, 68') which reflects outgoing laser radiation and is transparent to incoming radiation.

5. Laser irradiation unit (10) according to any of the preceding claims,
wherein a laser radiation module (16a, 16b) comprises a control system (82) which is configured to actuate an actuator (80) of an adjustable telescope (78) and/or an actuator (84) of an adjustable deflection mirror (72).

6. Laser irradiation unit (10) according to any of the preceding claims, further comprising:
a plurality of laser sources (32) which are configured to generate laser radiation and which are each connected to a laser radiation module (16a, 16b) using an optical fibre (34a, 34b),
wherein the directing unit (12) is configured to move the laser radiation modules (16a, 16b) independently of the laser sources (32).

7. Laser irradiation unit (10) according to any of the preceding claims, further comprising:
a plurality of first laser radiation modules (16a) configured to emit first laser radiation (60) of a first wavelength, a second laser radiation module (16b) configured to emit second laser radiation (86) of a second wavelength and focus it onto the target point,
wherein the first laser radiation modules (16a) are configured to detect the second laser radiation (86) using a detector (90), the first laser radiation modules (16a) having an adjustable optical system (63) which orientates the incoming second laser radiation (86) onto the detector (90) and simultaneously orientates the outgoing first laser radiation (60) onto the target point.

8. Laser irradiation unit (10) according to claim 7,
wherein the first laser radiation (60) is suitable for machining the target object.

9. Laser processing unit (10) according to either claim 7 or claim 8,
wherein the second laser radiation module (16b) is configured to detect an illumination radiation (92) using a detector (94);
wherein the second laser radiation module (16b) has an adjustable optical system (63) which orientates the incoming illumination radiation (92) onto the detector (94) and simultaneously orientates the outgoing second laser radiation (86) onto the target point.

10. Laser illumination unit (10) according to any of the preceding claims,
wherein the optical systems (63) of the laser radiation modules (16a, 16b) are of the same construction.

11. Laser irradiation unit (10) according to any of the preceding claims, further comprising:
a camera module (16d) which is rigidly connected to the laser radiation modules and which comprises a camera (98) and a telescope (78).

12. Laser irradiation unit (10) according to any of the preceding claims,
wherein the laser radiation modules (16a, 16b) each have a tubular housing (18),
wherein the tubular housings (18) are combined into a bundle which can be moved by the directing unit (12).

## Revendications

1. Unité d'irradiation par laser (10) destinée à irradier un objet cible avec une radiation laser haute puissance (60), l'unité d'irradiation par laser (10) comprenant :
plusieurs modules de radiation laser (16a, 16b) reliés l'un à l'autre de manière rigide, lesquels sont disposés pour émettre une radiation laser (60, 86) ;
une unité de pointage (12), destinée à orienter les modules de radiation laser (16a, 16b) sur l'objet cible,
**caractérisée par** un module de radiation d'illumination de cible (16c) relié de manière rigide aux modules de radiation laser (16a, 16b), lequel comprend une source d'illumination (96) pour créer une radiation d'illumination (92) et un télescope (78) pour focaliser la radiation d'illumination ;
dans laquelle chacun des modules de radiation laser (16a, 16b) comprend une optique (63), laquelle est conçue pour orienter la radiation laser (60, 86) sur un point cible de l'objet cible ;
dans laquelle les modules de radiation laser (16a, 16b) et le module de radiation d'illumination de cible (16c) comportent respectivement un boîtier de forme cylindrique réalisé de la même façon et sont orientés de façon à ce que leurs axes soient parallèles ;
dans laquelle les modules de radiation (16a, 16b, 16c) sont modularisés de telle sorte que l'optique (63) de chacun des modules de radiation (16a, 16b, 16c) comprend un détecteur (90, 94) pour saisir la radiation entrante (86, 88).

2. Unité d'irradiation par laser (10) selon la revendication 1 ou 2,
dans laquelle l'optique (63) d'un module de radiation laser (16a, 16b) comporte un télescope ajustable (78), lequel est disposé pour focaliser une radiation laser sortante (60, 86) sur le point cible et pour focaliser la radiation laser entrante (86, 92) sur un détecteur (90, 94).

3. Unité d'irradiation par laser (10) selon l'une des revendications précédentes,
dans laquelle l'optique (63) d'un module de radiation laser (16a, 16b) comporte un réflecteur passif ajustable (72, 72), lequel est disposé pour diriger une radiation laser sortante sur le point cible et pour diriger la radiation laser entrante sur un détecteur (90, 94).

4. Unité d'irradiation par laser (10) selon l'une des revendications précédentes,
dans laquelle l'optique (63) d'un module de radiation laser (16a, 16b) comporte un miroir semi-réfléchissant (68, 68), lequel reflète la radiation laser sortante et est transparent pour la radiation laser entrante.

5. Unité d'irradiation par laser (10) selon l'une des revendications précédentes,
dans laquelle un module de radiation laser (16a, 16b) comprend une commande (82), laquelle est disposée pour commander un actionneur (80) d'un télescope ajustable (78) et/ou un actionneur (84) d'un réflecteur passif ajustable (72) .

6. Unité d'irradiation par laser (10) selon l'une des revendications précédentes, comprenant en outre :
plusieurs sources laser (32), lesquelles sont disposées pour créer une radiation laser et sont reliées respectivement à un module de radiation laser (16a, 16b) par une fibre optique (34a, 34b),
dans laquelle l'unité de pointage est disposée pour déplacer les modules de radiation laser (16a, 16b) indépendamment des sources laser (32).

7. Unité d'irradiation par laser (10) selon l'une des revendications précédentes, comprenant en outre :
plusieurs premiers modules de radiation laser (16a), lesquels sont disposés pour émettre une première radiation laser (60) avec une première longueur d'onde, un deuxième module de radiation laser (16b), lequel est disposé pour émettre une deuxième radiation laser (86) avec une deuxième longueur d'onde et la focaliser sur le point cible,
dans laquelle les premiers modules de radiation laser (16a), sont disposés pour détecter la deuxième radiation laser (86) avec un détecteur, dans laquelle les premiers modules de radiation laser (16a) comportent une optique ajustable (63), laquelle dirige la deuxième radiation laser (86) entrante sur le détecteur (90) et dirige simultanément la première radiation laser (60) sortante sur le point cible.

8. Unité d'irradiation par laser (10) selon la revendication 7, dans laquelle la première radiation laser (60) est adaptée pour usiner l'objet cible.

9. Unité d'irradiation par laser (10) selon la revendication 7 ou 8,
dans laquelle le deuxième module de radiation laser (16b) est disposé pour détecter une radiation d'illumination (92) avec un détecteur (94) ;
dans laquelle le deuxième module de radiation laser (16b) comporte une optique ajustable (63), laquelle dirige la radiation d'illumination (92) entrante sur le détecteur (94) et dirige simultanément la deuxième radiation laser (86) sortante sur le point cible.

10. Unité d'irradiation par laser (10) selon l'une des revendications précédentes,
dans laquelle les optiques (63) des modules de radiation laser (16a, 16b) sont réalisées de manière identique.

11. Unité d'irradiation par laser (10) selon l'une des revendications précédentes, comprenant en outre :
un module de caméra (16d) relié de manière rigide aux modules de radiation laser, lequel comprend une caméra (98) et un télescope (78).

12. Unité d'irradiation par laser (10) selon l'une des revendications précédentes,
dans laquelle les modules de radiation laser (16a, 16b) comportent respectivement un boîtier (18) de forme tubulaire,
dans laquelle les boîtiers (18) de forme tubulaire sont assemblés en un faisceau, lequel peut être déplacé par l'unité de pointage (12).
